# EUROPÄISCHE PATENTANMELDUNG

(11) **EP 3 501 665 A1**
(43) Veröffentlichungstag der Anmeldung: **26.06.2019**
(21) Anmeldenummer: 17208442.8
(22) Anmeldetag: 19.12.2017
(51) Int. Cl.: B05C 3/10, B05C 3/18

(54) **SYSTEM UND VERFAHREN ZUM FERTIGEN EINES ROTORBLATTS**

(71) Anmelder: Nordex Energy GmbH, 22419 Hamburg (DE)
(72) Erfinder: Krause, David, 18119 Rostock (DE)
(74) Vertreter: Epping - Hermann - Fischer

(57) **Zusammenfassung**

Die Erfindung betrifft ein System (107) zum Fertigen eines Rotorblatts (104) für eine Windenergieanlage (100), aufweisend
- eine Haltevorrichtung (108) zum Halten eines Versteifungssteges (110) für ein Rotorblatt (104), und
- eine auf einem Boden (119) angeordnete Auftragsvorrichtung (109), die eine Düseneinheit (116) zum Auftragen von Klebemittel (115) auf den Versteifungssteg (110) aufweist, wobei die Auftragsvorrichtung (109) und die Haltevorrichtung (108) relativ zueinander entlang einer Hauptrichtung (H) bewegbar sind,

wobei die Auftragsvorrichtung (109) derart ausgebildet ist, dass während der relativen Bewegung der Auftragsvorrichtung (109) und der Haltevorrichtung (108) zueinander die Düseneinheit (116) und der in der Haltevorrichtung (108) gehaltene Versteifungssteg (110) entlang der Hauptrichtung (H) relativ zueinander bewegt werden und mittels der Düseneinheit (116) Klebemittel (115) an eine dem Boden (119) zugewandte Unterseite (114) des Versteifungsstegs (110) appliziert wird.

Die Erfindung betrifft auch ein Verfahren.

## Beschreibung

Die Erfindung betrifft ein System sowie ein zugehöriges Verfahren zum Fertigen eines Rotorblatts für eine Windenergieanlage.

Windenergieanlagen mit Rotorblättern sind aus dem Stand der Technik vielfach bekannt und werden verwendet, um Windenergie in elektrische Energie umzuwandeln. Rotorblätter von Windenergieanlagen weisen typischerweise eine äußere Hülle oder Schale auf, die durch zwei fest miteinander verbundene Rotorblatthalbschalen gebildet ist. Die Rotorblatthalbschalen und somit die Rotorblätter sind aus einem oder mehreren Verbundwerkstoffen oder Verbundlaminaten hergestellt. Innerhalb der Rotorblätter sind ein oder mehrere Versteifungsstege vorgesehen, die eine Steifigkeit des Rotorblatts erhöhen, um den im Betrieb oft hohen Windlasten standhalten zu können. Typischerweise sind diese Stege über Klebeverbindungen mit den Rotorblatthalbschalen innerhalb des Rotorblatts verbunden.

Bei einer typischen Herstellung eines Rotorblatts werden derartige Stege zunächst mittels einer Hebe- oder Kranvorrichtung in eine erste Rotorblatthalbschale probeweise eingesetzt, sodass ein Bereich für Klebungen, etwa für Kleberaupen, auf der Innenseite der Rotorblatthalbschale gekennzeichnet werden kann. Anschließend werden die Stege aus der Rotorblattschale wieder entfernt, sodass nun solche Kleberaupen aufgetragen werden können. Schließlich werden die Stege erneut in die Rotorblatthalbschale eingesetzt und mittels der Kleberaupen verklebt. Nach dem Aushärten der Klebeverbindung wird die zweite Rotorblatthalbschale mit den eingesetzten Stegen und der ersten Rotorblatthalbschale zur Bildung eines Rotorblatts verklebt.

Ein Herstellungsverfahren, bei dem die Rotorblatthalbschalen mit Klebemittel versehen und anschließend die Stege eingesetzt werden, ist in der WO 2013/164101 A1 beschrieben.

Eine Aufgabe, die der Erfindung zugrunde liegt, ist es, ein Konzept anzugeben, welches dazu beiträgt, die Fertigung von Rotorblättern effizienter und kostengünstiger zu gestalten.

Gemäß einem Aspekt wird ein System zum Fertigen eines Rotorblatts für eine Windenergieanlage offenbart. Das System weist eine Haltevorrichtung zum Halten eines Versteifungssteges für ein Rotorblatt auf. Weiter ist eine auf einem Boden angeordnete Auftragsvorrichtung vorgesehen, die eine Düseneinheit zum Auftragen von Klebemittel auf den Versteifungssteg aufweist. Die Auftragsvorrichtung und die Haltevorrichtung sind relativ zueinander entlang einer Hauptrichtung bewegbar. Die Auftragsvorrichtung ist derart ausgebildet, dass während der relativen Bewegung der Auftragsvorrichtung und der Haltevorrichtung zueinander die Düseneinheit und der in der Haltevorrichtung gehaltene Versteifungssteg entlang der Hauptrichtung relativ zueinander bewegt werden und mittels der Düseneinheit Klebemittel an eine dem Boden zugewandte Unterseite des Versteifungsstegs appliziert wird.

Bei dem beschriebenen System wird das Klebemittel entgegen der Schwerkraftrichtung von unten an den Versteifungssteg appliziert. Hierzu ist zumindest die Düseneinheit im Wesentlichen unterhalb der Haltevorrichtung und somit unterhalb des Steges während der Applikation des Klebemittels angeordnet. Es ist auch denkbar, dass die gesamte Auftragsvorrichtung bei der Applikation räumlich unterhalb der Haltevorrichtung bzw. zumindest des Versteifungssteges angeordnet ist. Dadurch, dass ein Versteifungssteg im gehaltenen Zustand an der Unterseite mit Klebemittel, etwa Klebeharz, versehen werden kann, kann der Versteifungssteg direkt nach dem Applizieren des Klebemittels in eine erste Rotorblatthalbschale eingesetzt und direkt mit dieser verklebt werden. Die erste Rotorblatthalbschale ist beispielsweise neben oder hinter dem beschriebenen System angeordnet. Die erste Rotorblatthalbschale ist beispielsweise in einer Form oder Vorrichtung angeordnet oder festgelegt. Anschließend kann die zweite Rotorblatthalbschale mit der ersten zusammengefügt, etwa verklebt werden, um das endgültige Rotorblatt zu bilden. Vor dem Zusammenfügen wird typischerweise auf die Oberseite des Versteifungsstegs ebenfalls Klebemittel appliziert, beispielsweise mit einer weiteren oder anderen Applikationsvorrichtung.

Mittels des beschriebenen Systems wird zu einer erheblichen Zeiteinsparung bei der Herstellung von Rotorblättern beigetragen. So kann beispielsweise etwa eine Stunde Durchlaufzeit im Vergleich zum dem eingangs genannten Herstellverfahren eingespart werden. Es wird weiter ermöglicht, dass der Klebemittelauftrag parallel zu Tätigkeiten in oder an den Rotorblatthalbschalen erfolgen kann. Weiterhin wird ermöglicht, dass das eingangs erwähnte manuelle Kennzeichnen für das Auftragen von Kleberaupen in einer Rotorblatthalbschale entfällt. Weiterhin wird zu einem definierten Auftrag von Klebemittelmengen beigetragen. Beispielsweise wird zu einer Reduzierung von überschüssigen Klebemitteln, auch Abfall, beigetragen.

Unter der Hauptrichtung wird diejenige Richtung verstanden, entlang derer die Düseneinheit und die Haltevorrichtung, insb. der Versteifungssteg im gehaltenen Zustand, relativ zueinander bewegt werden. Die Hauptrichtung entspricht etwa einer Längsrichtung des Versteifungssteges im gehaltenen Zustand und somit einer Längsrichtung eines Rotorblatts.

Bei der Unterseite des Versteifungssteges handelt es sich um diejenige Seite, die bei der Fertigung in Schwerkraftrichtung nach unten in Richtung des Bodens weist. Bei der Unterseite handelt es sich um eine Fügefläche, die mit einer Innenfläche der ersten Rotorblatthalbschale mittels des Klebemittels fest verbunden wird. Die Unterseite ist beispielsweise an einem Stegfuß oder Montageflansch des Versteifungssteges angeordnet. Die Unterseite beziehungsweise der Stegfuß sind an einem Ende des Versteifungssteges, welches bei der Fertigung dem Boden zugewandt ist, vorgesehen. Es handelt sich um ein unteres Ende des Steges bezüglich eines Querschnitts des Versteifungssteges. Der Versteifungssteg hat beispielsweise ein I-, L- oder C-förmiges Profil oder eine Mischung aus beiden im Querschnitt.

Die Haltevorrichtung ist beispielsweise Teil einer Hebevorrichtung mit einer Traverse oder einer Kranvorrichtung. Dadurch ist es beispielsweise möglich, die Haltevorrichtung und somit den gehaltenen Versteifungssteg zu bewegen. An der Haltevorrichtung ist der Versteifungssteg fest anbringbar. Beispielsweise handelt es sich bei der Haltevorrichtung um eine Unterdruckvorrichtung, mittels der der Steg gehalten wird. Beispielsweise umfasst die Haltevorrichtung Saugnäpfe zum Halten des Steges. Andere Haltemittel zum Halten des Versteifungssteges sind denkbar. Beispielsweise kann der Versteifungssteg zwischen zwei Haltebacken geklemmt sein, wobei beispielsweise ein Klemmdruck oder eine Klemmkraft hydraulisch oder pneumatisch aufgebracht werden.

Die Auftragsvorrichtung verfügt über zumindest eine Düseneinheit, die mit Klebemittel versorgt wird, beispielsweise aus einem Klebemitteltank oder -speicher. Die Düseneinheit hat beispielsweise eine Klebemittelwanne, die mit Klebemittel gefüllt ist. Die Auftragsvorrichtung hat beispielsweise ein Grundgestell, an welchem die Düseneinheit beweglich gelagert ist. Die Düseneinheit appliziert das Klebemittel entweder unter erhöhtem Umgebungsdruck oder unter Normaldruck. Beispielsweise reicht ein Streifen oder Durchziehen der Unterseite des Versteifungssteges durch die mit Klebemittel gefüllte Klebemittelwanne für die gewünschte Applikation aus.

Gemäß einer Ausführungsform ist die Auftragsvorrichtung, zumindest während der Klebemittelapplikation, stationär an einem Boden angeordnet und die Haltevorrichtung ist relativ zu der stationär angeordneten Auftragsvorrichtung derart bewegbar, dass der Versteifungssteg relativ zu der Düseneinheit bewegt und dabei Klebemittel mittels der Düseneinheit an die Unterseite des Versteifungssteges appliziert wird. Mit anderen Worten wird der Steg durch die Auftragsvorrichtung, beispielsweise entlang oder durch die Düseneinheit bzw. die zuvor erwähnte Klebemittelwanne, gezogen. Dadurch wird zu einer geringen Komplexität der stationären Auftragsvorrichtung beigetragen im Vergleich zu einer Auftragsvorrichtung, die als mobile Vorrichtung ausgebildet ist, etwa hinsichtlich Anschaffungskosten, Langlebigkeit und/oder Wartungsaufwand.

Gemäß einer alternativen Ausführungsform ist die Haltevorrichtung, zumindest während der Klebemittelapplikation, stationär angeordnet, während die Auftragsvorrichtung relativ zu dem Boden und relativ zu der Haltevorrichtung bewegbar ist, sodass die Düseneinheit entlang der Unterseite des Versteifungssteges bewegt wird und dabei Klebemittel auf die Unterseite appliziert wird. Mit anderen Worten werden in diesem Fall die Düseneinheit, etwa die erwähnte Klebemittelwanne, und möglicherweise das Grundgestell entlang des stationär gehaltenen Versteifungssteges und somit der Hauptrichtung gezogen. Dadurch kann im Vergleich zur stationären Anordnung der Auftragsvorrichtung Platz beim Applizieren eingespart werden.

Der Begriff "stationär" bedeutet hier und im Folgenden, dass das jeweilige stationär angeordnete System, etwa die Auftragsvorrichtung oder die Haltevorrichtung, im Wesentlichen ortsfest ist. Dabei bewegen sich die stationären Komponenten nicht entlang der oben beschriebenen Hauptrichtung. Dennoch können von der jeweiligen stationär angeordneten Komponente Teilkomponenten, etwa die Düseneinheit, relativ zu den restlichen Komponenten der stationär angeordneten Komponente beweglich sein, etwa in Richtungen, die von der Hauptrichtung abweichen. Etwa ist das Grundgestell ortsfest, jedoch die Düseneinheit ist zumindest in einer Richtung relativ zu dem Grundgestell beweglich.

Gemäß einer Ausführungsform ist die Düseneinheit so ausgebildet, dass die Düseneinheit während der relativen Bewegung entlang des gehaltenen Versteifungsstegs in einer oder zwei Richtungen senkrecht zu der Hauptrichtung, etwa senkrecht zu einer Längsachse des Versteifungsstegs, beweglich ist. Mit anderen Worten wird bei der Applikation des Klebemittels die Düseneinheit relativ zu dem Versteifungssteg entlang der Hauptrichtung und somit der Längsachse des Versteifungsstegs geführt. Dabei kann die Düseneinheit in einer oder zwei Richtungen senkrecht zur Längsachse des Versteifungssteges beziehungsweise senkrecht zur Hauptrichtung bewegt werden. Die beiden Richtungen selbst sind senkrecht zueinander ausgerichtet. Die beiden Richtungen sind beispielsweise parallel zu einer X- und Z-Richtung eines kartesischen Koordinatensystems, während die Hauptrichtung parallel zur Y-Richtung verläuft. Dadurch sind ein oder zwei Freiheitsgrade für die Düseneinheit gegeben und die Düseneinheit kann einer Kontur des Versteifungssteges folgen oder sich an diese anpassen, beispielsweise einer Stegfußkontur des Versteifungssteges. Die Düseneinheit ist folglich bezüglich des Grundgestells der Auftragsvorrichtung beweglich an letzterer gelagert, sodass zumindest die beiden Freiheitsgrade ermöglicht sind. Die Düseneinheit ist entlang der Längsrichtung, etwa der Hauptrichtung, jedoch unbeweglich oder starr bezüglich der Auftragsvorrichtung, beispielsweise bezüglich des Grundgestells. Die Düseneinheit kann entweder aktiv, etwa mittels entsprechender Antriebseinheiten und Motoren gesteuert werden, oder jedoch passiv, wie im Folgenden noch näher erläutert wird.

Gemäß einer Ausführungsform ist die Düseneinheit derart an dem mittels der Haltevorrichtung gehaltenen Versteifungssteg anbringbar, dass die Düseneinheit während der relativen Bewegung der Auftragsvorrichtung zu der Haltevorrichtung an dem Versteifungssteg geführt ist und einer Kontur des Versteifungssteges folgt. Beispielsweise weist die Düseneinheit Führungs- und/oder Haltemittel auf, mittels derer die Düseneinheit an dem Versteifungssteg gelagert ist, insb. formschlüssig. Eine derartige Ausführungsform trägt zu der oben genannten passiven Steuerung der Düseneinheit bei, wobei durch die Führung an dem Versteifungssteg während der relativen Bewegung der Auftragsvorrichtung und der Haltevorrichtung zueinander die Düseneinheit entsprechend der Kontur des Versteifungssteges in der einen oder den zwei oben genannten Richtungen automatisch verfahren wird. Mit anderen Worten steuert die Kontur des Versteifungssteges im Bereich der Unterseite die Lage der Düseneinheit in den zwei oben genannten Richtungen senkrecht zur Längsachse des Versteifungssteges während der Bewegung. Die Düseneinheit muss lediglich beweglich gelagert sein, wird ansonsten passiv bewegt.

Gemäß einer Ausführungsform weist die Düseneinheit eine Klebemittelwanne auf, mittels der das Klebemittel an die Unterseite des Versteifungssteges appliziert wird. Die Klebemittelwanne wird beispielsweise über einen Klebemitteltank mit Klebemittel versorgt. Die Klebemittelwanne trägt zu den oben genannten Vorteilen und Funktionen bei.

Gemäß einer weiteren Ausführungsform umgreift oder hintergreift die Klebemittelwanne den mittels der Haltevorrichtung gehaltenen Versteifungssteg zumindest an einer Seite formschlüssig, sodass die Düseneinheit an dem Versteifungssteg gehalten ist. Dadurch wird zu den genannten Vorteilen und Funktionen beigetragen, insb. der passiven Bewegungssteuerung der Düseneinheit.

Gemäß einer Ausführungsform ist die Klebemittelwanne in einer Querrichtung quer zu einer Längsrichtung des Versteifungsstegs in einer Breite veränderbar. Dadurch kann die Klebemittelwanne sich der Kontur des Versteifungssteges anpassen, wobei wiederum eine passive oder aktive Steuerung analog zu obiger Beschreibung bezüglich der Düseneinheit denkbar ist.

Gemäß einer Ausführungsform ist die Düseneinheit lösbar an der Auftragsvorrichtung angeordnet. Dadurch wird zu einer einfachen Demontage, Reinigung und/oder Wartung der Düseneinheit beigetragen.

Gemäß einer Ausführungsform ist die Haltevorrichtung ausgebildet, zwei Versteifungsstege zu halten und die Auftragsvorrichtung weist zwei Düseneinheiten auf, wobei je eine Düseneinheit einem Versteifungssteg zugeordnet ist. Im Wesentlichen gilt das oben Gesagte analog auch für die zweite Düseneinheit bzw. den weiteren Versteifungssteg. Ein solches System kann somit gleichzeitig zwei Stege mit Klebemittel an der Unterseite versehen und ermöglich eine besonders effiziente Herstellung eines Rotorblatts mit zwei Stegen.

Gemäß einem zweiten Aspekt wird ein Verfahren zum Fertigen eines Rotorblatts mit einem System gemäß dem ersten Aspekt offenbart. Das Verfahren weist folgende Schritte auf:
- Bereitstellen der Auftragsvorrichtung und der Haltevorrichtung, wobei die Haltevorrichtung einen Versteifungssteg hält;
- Bewegen der Auftragsvorrichtung und der Haltevorrichtung derart relativ zueinander, dass die Düseneinrichtung relativ zu dem Versteifungssteg bewegt und Klebemittel an eine Unterseite des Versteifungsstegs appliziert wird.

Das Verfahren ermöglicht im Wesentlichen die vorgenannten Vorteile und Funktionen. Das Verfahren kann sinngemäß entsprechend den anhand des Systems des ersten Aspekts beschriebenen Merkmalen weitergebildet sein.

Nach dem Versehen mit Klebemittel folgen beispielsweise die weiteren Schritte:
- Einsetzen des Steges in eine erste Rotorblattschale;
- Verkleben des Steges mit einer Innenseite der Rotorblattschale;
- Aufbringen von Klebemittel auf eine der Unterseite gegenüberliegende Oberseite des Versteifungssteges, wobei die Oberseite analog zu der beschriebenen Unterseite ausgebildet sein kann, etwa als Stegfuß;
- Aufsetzen einer zweiten Rotorblattschale und Verkleben dieser mit der ersten Rotorblattschale und dem Versteifungssteg.

Gemäß einer Ausführungsform wird der Versteifungssteg mittels der Haltevorrichtung vor dem Schritt des Bewegens neben einer Rotorblatthalbschale oder einer Form zur Fertigung einer Rotorblatthalbschale positioniert. Dies trägt dazu bei, dass der Versteifungssteg mittels der Haltevorrichtung nach der Applikation des Klebemittels durch die Auftragsvorrichtung anschließend direkt in die erste Rotorblatthalbschale eingelegt werden kann. Beispielsweise kann der Steg am blattspitzenseitigen Ende neben der Form positioniert und durch die Auftragsvorrichtung in Richtung des blattwurzelseitigen Endes gezogen werden und liegt dann parallel zu der ersten Rotorblatthalbschale. Das Einsetzen des Steges ist nun einfach ohne Zurücklegen weiter Hebewege möglich. Dies trägt zu einem besonders effizienten Herstellungsverfahren bei. Alternativ kann der Steg in Längsrichtung parallel neben der Rotorblatthalbschale bzw. der Form positioniert werden und die Auftragsvorrichtung wird in Längsrichtung der Rotorblatthalbschale unter dem Versteifungssteg entlang bewegt.

Gemäß einer Ausführungsform ist die Auftragsvorrichtung stationär an einem Boden angeordnet und die Haltevorrichtung wird derart relativ zu der Auftragsvorrichtung bewegt, dass der Versteifungssteg durch die Auftragsvorrichtung geführt und dabei mittels der Düseneinrichtung Klebemittel auf die Unterseite des Versteifungssteges appliziert wird.

Gemäß einer alternativen Ausführung ist die Haltevorrichtung stationär angeordnet und die Auftragsvorrichtung wird relativ zu einem Boden und relativ zu der Haltevorrichtung derart bewegt, dass die Düseneinheit entlang der Unterseite des Versteifungssteges bewegt und dabei Klebemittel auf die Unterseite appliziert wird.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind figurenübergreifend mit den gleichen Bezugszeichen versehen.

In den Figuren zeigen:
Figur 1 eine schematische Darstellung einer Windenergieanlage gemäß einem Ausführungsbeispiel,
Figuren 2a und 2b eine schematische Darstellung eines Systems zur Fertigung eines Rotorblatts gemäß einem Ausführungsbeispiel,
Figur 3a und 3b eine schematische Darstellung eines Systems zur Fertigung eines Rotorblatts gemäß einem weiteren Ausführungsbeispiel, und
Figur 4 ein schematisches Ablaufdiagramm für ein Verfahren zum Herstellen eines Rotorblatts.

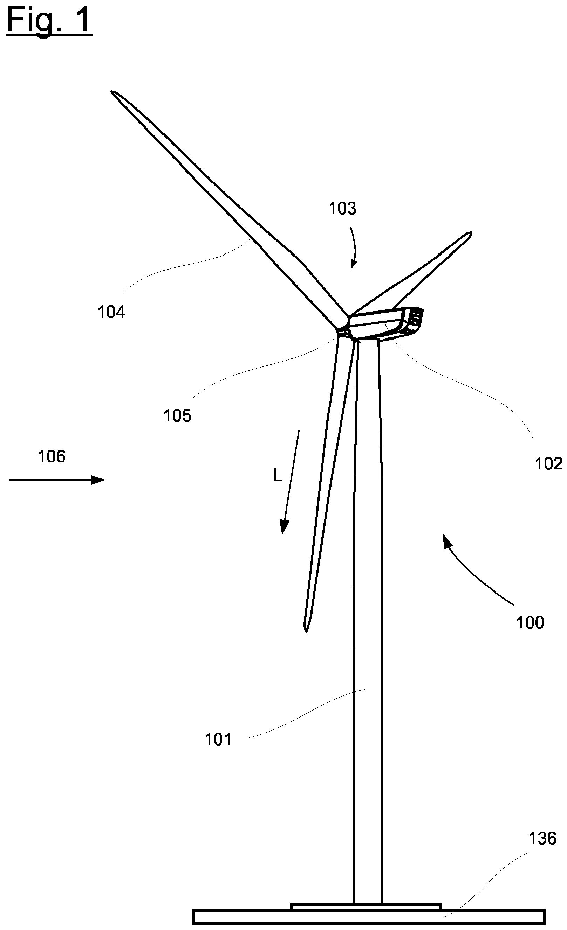

Figur 1 zeigt eine schematische Darstellung einer Windenergieanlage 100 gemäß einem Ausführungsbeispiel. Die Windenergieanlage 100 weist einen Turm 101 auf. Der Turm 101 ist mittels eines Fundaments 136 auf einem Untergrund befestigt. An einem dem Untergrund gegenüberliegenden Ende des Turms 101 ist eine Gondel 102 drehbar gelagert. Die Gondel 102 weist beispielsweise einen Generator auf, der über eine Rotorwelle (nicht gezeigt) mit einem Rotor 103 gekoppelt ist. Der Rotor 103 weist ein oder mehrere Rotorblätter 104 auf, die an einer Rotornabe 105 angeordnet sind. Ein Rotorblatt 104 ist durch zwei Rotorblatthalbschalen gebildet, die im Inneren zwei Versteifungsstege aufweisen. Ein Rotorblatt 104 erstreckt sich entlang einer Längsrichtung L.

Der Rotor 103 wird im Betrieb durch eine Luftströmung, beispielsweise Wind, der entlang einer Hauptströmungsrichtung 106 einströmt, in Rotation versetzt. Diese Rotationsbewegung wird über die Rotorwelle und gegebenenfalls ein Getriebe zu dem Generator übertragen. Der Generator wandelt die kinetische Energie des Rotors 103 in elektrische Energie um.

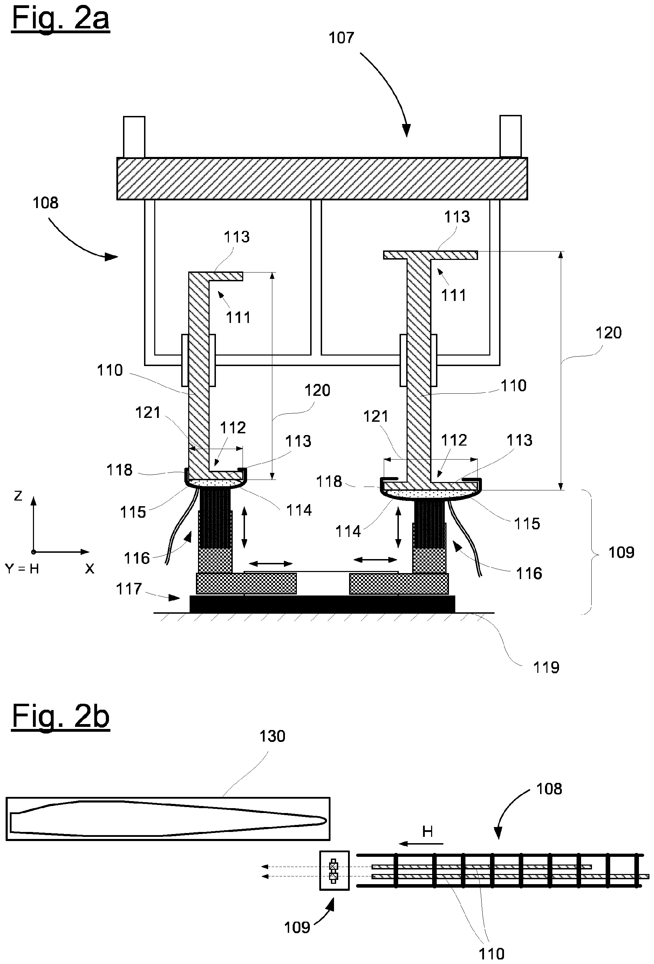

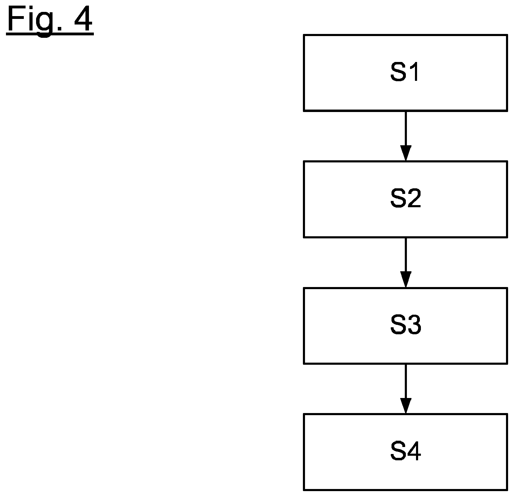

Die Figuren 2a und 2b zeigen ein System 107 zur Herstellung eines Rotorblatts 104 einer Windenergieanlage. Die Herstellung eines Rotorblatts 104 wird exemplarisch anhand des in Figur 4 dargestellten Ablaufdiagramms beschrieben.

Gemäß einem ersten Schritt S1 des Herstellungsverfahrens werden eine Auftragsvorrichtung 109 sowie eine Haltevorrichtung 108 eines Systems 107 bereitgestellt. Die Auftragsvorrichtung 109 ist beispielsweise direkt vor oder neben einem Ende einer Form 130 zur Fertigung einer Rotorblatthalbschale positioniert, wobei das Ende einer Rotorblattspitze oder einer Rotorblattwurzel zugeordnet ist.

Die Haltevorrichtung 108 ist Teil einer Kranvorrichtung oder Hebevorrichtung und hält zwei Versteifungsstege 110, die innerhalb zweier ein Rotorblatt 104 bildenden Rotorblatthalbschalen eingeklebt und fixiert werden. Die Haltevorrichtung 108 hält die beiden Stege 110 beispielsweise mittels Saugnäpfen und Unterdruck. In Figur 2 sind Profilquerschnitte der Versteifungsstege 110 gezeigt, die jeweils an einem oberen Ende 111 sowie an einem unteren Ende 112 Stegfüße 113 haben. Der in Figur 2 linke Versteifungssteg 110 hat ein C-Profil und der rechte Versteifungssteg 110 ein I- bzw. Doppel-T-Profil.

Die Haltevorrichtung 108 kann frei in allen Raumrichtungen bewegt werden, so dass die daran gehaltenen Versteifungsstege 110 verschieden positioniert werden können. Die Versteifungsstege 110 erstrecken sich entlang der in Figur 1 gezeigten Längsrichtung L. Die Längsrichtung L fällt mit der Y-Richtung des in Figur 2 eingezeichneten kartesischen Koordinatensystems zusammen.

Die Auftragsvorrichtung 109 dient dazu, an Unterseiten 114 der Stegfüße 113 der unteren Enden 112 Klebemittel 115 anzubringen. Die Auftragsvorrichtung 109 ist für die Applikation des Klebemittels 115 wie in Figur 2 gezeigt im Wesentlichen unter der Haltevorrichtung 108 und den Versteifungsstegen 110 angeordnet. Die Auftragsvorrichtung 109 hat jeweils für einen Versteifungssteg 110 eine Düseneinheit 116, die an einem Grundgestell 117 der Auftragsvorrichtung 109 beweglich in X- und Z-Richtung, etwa verschiebbar, gelagert sind (siehe Doppelpfeile in Figur 2). Die Düseneinheit 116 weist eine Klebemittelwanne 118 auf, in die Klebemittel 115, beispielsweise aus einem nicht gezeigten Klebemitteltank, einbringbar ist. Mittels des Grundgestells 117 ist die Auftragsvorrichtung 109 stationär, etwa ortsfest, an einem Boden 119 beziehungsweise einem Untergrund angeordnet.

In einem nächsten Schritt S2 werden die beiden Versteifungsstege 110 vor dem spitzenseitigen Ende der Rotorblatthalbschale bzw. der Form 130 zur Fertigung der Rotorblatthalbschale positioniert. Dabei sind die Versteifungsstege 110 auch vor der Auftragsvorrichtung 109 angeordnet.

In einem nächsten Schritt S3 wird nun die Haltevorrichtung 108 relativ zu der Auftragsvorrichtung 109 entlang einer Hauptrichtung H bewegt, die der Y-Richtung des in Figur 2 eingezeichneten Koordinatensystems entspricht. Dabei werden die Versteifungsstege 110 entlang ihrer Längsrichtung L durch die Düseneinheiten 116 gezogen werden. Dabei wird Klebemittel 115 auf die Unterseiten 114 der Stegfüße 113 appliziert.

Die Düseneinheiten 116 sind während der Applikation an den Stegfüßen 113 formschlüssig geführt. Im Ausführungsbeispiel hintergreifen oder umgreifen die Klebemittelwannen 117 die Stegfüße 113 zumindest an einer Seite formschlüssig, sodass diese daran gehalten sind. Im Schritt des Bewegens S3 kann sich die Kontur der Versteifungsstege 110 bezüglich der Längsrichtung L bzw. Hauptrichtung H möglicherweise ändern, wobei aufgrund der formschlüssigen Kopplung mit den Düseneinheiten 116 die Düseneinheiten 116 in Z-Richtung sowie in X-Richtung passiv aufgrund der verschiebbaren Lagerung bewegt werden und der sich ändernden Kontur folgen. So kann beispielsweise eine Veränderung einer Steghöhe 120 eines Versteifungsstegs 110 entlang der Z-Richtung kompensiert werden. Auch kann beispielsweise eine Konturänderung eines Stegfußes 113 entlang der X-Richtung durch die Beweglichkeit der Düseneinheiten 116 ausgeglichen werden. Alternativ werden die Düseneinheiten 116 aktiv, beispielsweise mittels Antriebsvorrichtungen, der Kontur entsprechend gesteuert.

Optional können auch Breiten der Klebemittelwannen 118 in einer Querrichtung zur Hauptrichtung H, etwa bezüglich der X-Richtung, verändert werden, so dass auf eine veränderbare Stegfußbreite 121 der Stegfüße 113 Rücksicht genommen wird.

Sobald die Versteifungsstege 110 vollständig durch die Auftragsvorrichtung 109 gezogen sind, sind diese an den Unterseiten 114 vollständig mit Klebemittel 115 versehen und können in einem weiteren Schritt S4 anschließend in die erste Rotorblatthalbschale eingelegt und darin verklebt werden.

Das beschriebene Verfahren ermöglicht die eingangs genannten Vorteile und Funktionen.

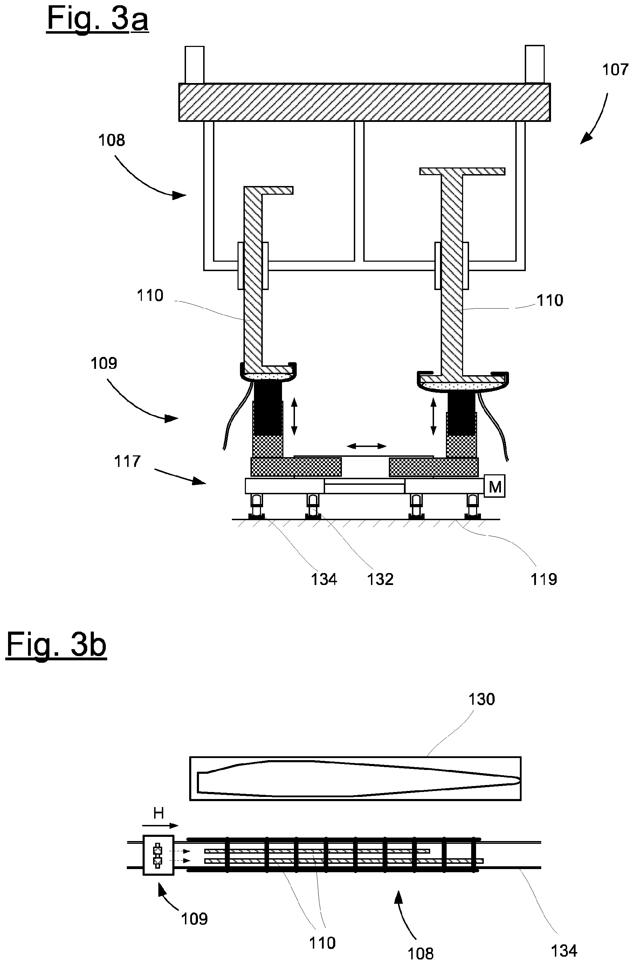

Die Figuren 3a und 3b zeigen ein alternatives Ausführungsbeispiel eines Systems 107, welches im Wesentlichen dem zuvor beschriebenen System entspricht. Es geltend die obigen Ausführungen, wobei nicht alle Merkmale erneut mit Bezugszeichen versehen sind. Im Unterschied zum zuvor beschriebenen System 107 ist die Auftragsvorrichtung 109 nicht stationär mit dem Boden 119 verbunden oder an diesem angeordnet ist. Vielmehr ist die Auftragsvorrichtung 109 selbst am Boden 119 bewegbar gelagert, beispielsweise über Räder oder Rollen 132 auf einem Schienensystem 134. Ein Motor M dient als Antrieb. Insb. hat das Grundgestell 117 mehrere Räder oder Rollen 132.

Zur Applikation des Klebemittels werden nun die Versteifungsstege 110 mittels der Haltevorrichtung 108 positionsfest oder ortsfest gehalten, sodass im Schritt S3 der relativen Bewegung zueinander die Auftragsvorrichtung 109 selbst entlang der Längsrichtung L der Versteifungsstege 110 in Hauptrichtung H unter diesen hinweggefahren wird. Dabei sind die Düseneinheiten 116 wiederum formschlüssig an den Stegfüßen 113 an den unteren Enden 112 der Versteifungsstege 110 angeordnet, sodass Klebemittel 115 an die Unterseiten 114 der Stegfüße 113 appliziert wird.

Im Wesentlichen ermöglicht das System 107 gemäß dem zweiten Ausführungsbeispiel die gleichen Vorteile und Funktionen. Im Vergleich zu dem anhand der Figuren 2a und 2b beschriebenen System 107 muss weniger Raum oder Platz für das System 107 vorgehalten werden, da lediglich die Auftragsvorrichtung 108 über im Wesentlichen eine Gesamtlänge der Versteifungsstege 110 verfahren werden muss, während im Beispiel gemäß der Figuren 2a und 2b die doppelte Gesamtlänge benötigt wird.

### Bezugszeichenliste

- 100: Windenergieanlage
- 101: Turm
- 102: Gondel
- 103: Rotor
- 104: Rotorblatt
- 105: Rotornabe
- 106: Hauptströmungsrichtung
- 107: System
- 108: Haltevorrichtung
- 109: Auftragsvorrichtung
- 110: Versteifungsstege
- 111: oberes Ende
- 112: unteres Ende
- 113: Stegfüße
- 114: Unterseite
- 115: Klebemittel
- 116: Düseneinheit
- 117: Grundgestell
- 118: Klebemittelwanne
- 119: Boden
- 120: Steghöhe
- 121: Stegfußbreite
- 130: Form
- 132: Räder
- 134: Schienen
- 136: Fundament
- L: Längsrichtung
- H: Hauptrichtung
- M: Motor
- X: Richtung
- Y: Richtung
- Z: Richtung

## Patentansprüche

1. System (107) zum Fertigen eines Rotorblatts (104) für eine Windenergieanlage (100), aufweisend
- eine Haltevorrichtung (108) zum Halten eines Versteifungssteges (110) für ein Rotorblatt (104), und
- eine auf einem Boden (119) angeordnete Auftragsvorrichtung (109), die eine Düseneinheit (116) zum Auftragen von Klebemittel (115) auf den Versteifungssteg (110) aufweist, wobei die Auftragsvorrichtung (109) und die Haltevorrichtung (108) relativ zueinander entlang einer Hauptrichtung (H) bewegbar sind,
wobei die Auftragsvorrichtung (109) derart ausgebildet ist, dass während der relativen Bewegung der Auftragsvorrichtung (109) und der Haltevorrichtung (108) zueinander die Düseneinheit (116) und der in der Haltevorrichtung (108) gehaltene Versteifungssteg (110) entlang der Hauptrichtung (H) relativ zueinander bewegt werden und mittels der Düseneinheit (116) Klebemittel (115) auf eine dem Boden (119) zugewandte Unterseite (114) des Versteifungsstegs (110) appliziert wird.

2. System (107) nach Anspruch 1,
wobei die Auftragsvorrichtung (109) stationär auf dem Boden (119) angeordnet und die Haltevorrichtung (108) relativ zu der stationär angeordneten Auftragsvorrichtung (109) derart bewegbar ist, dass der gehaltene Versteifungssteg (110) relativ zu der Düseneinheit (116) bewegt und dabei Klebemittel (115) mittels der Düseneinheit (116) auf die Unterseite (114) des Versteifungssteges (110) appliziert wird.

3. System (107) nach Anspruch 1,
wobei die Haltevorrichtung (108) stationär angeordnet und die Auftragsvorrichtung (109) relativ zu einem Boden (119) und relativ zu der Haltevorrichtung (108) derart bewegbar ist, dass die Düseneinheit (116) entlang der Unterseite (114) des Versteifungssteges (110) bewegt und dabei Klebemittel (115) auf die Unterseite (114) appliziert wird.

4. System (107) nach einem der vorhergehenden Ansprüche,
wobei die Düseneinheit (116) so ausgebildet ist, dass die Düseneinheit (116) während der relativen Bewegung entlang des gehaltenen Versteifungsstegs (110) in einer oder zwei Richtungen (X, Z) senkrecht zu der Hauptrichtung (H) beweglich ist.

5. System (107) nach einem der vorhergehenden Ansprüche,
wobei die Düseneinheit (116) derart an dem mittels der Haltevorrichtung (108) gehaltenen Versteifungssteg (110) anbringbar ist, dass die Düseneinheit (116) während der relativen Bewegung der Auftragsvorrichtung (109) zu der Haltevorrichtung (108) an dem Versteifungssteg (110) geführt ist und einer Kontur des Versteifungssteges (110) folgt.

6. System (107) nach einem der vorhergehenden Ansprüche,
wobei die Düseneinheit (116) eine Klebemittelwanne (118) aufweist, mittels der das Klebemittel (115) auf die Unterseite (114) des Versteifungssteges (110) appliziert wird.

7. System (107) nach Anspruch 6,
wobei die Klebemittelwanne (118) den mittels der Haltevorrichtung (108) gehaltenen Versteifungssteg (110) zumindest an einer Seite formschlüssig umgreift oder hintergreift, so dass die Düseneinheit (116) an dem Versteifungssteg (110) gehalten ist.

8. System (107) nach Anspruch 6 oder 7,
wobei die Klebemittelwanne (118) in einer Querrichtung quer zu einer Längsrichtung (L) des Versteifungssteges (110) in einer Breite veränderbar ist.

9. System (107) nach einem der vorhergehenden Ansprüche,
wobei die Düseneinheit (116) lösbar an der Auftragsvorrichtung (109) angeordnet ist.

10. System nach einem der vorhergehenden Ansprüche, wobei die Haltevorrichtung (108) ausgebildet ist, zwei Versteifungsstege (110) zu halten und die Auftragsvorrichtung (109) zwei Düseneinheiten (116) aufweist, wobei je eine Düseneinheit (116) einem Versteifungssteg (110) zugeordnet ist.

11. Verfahren zum Fertigen eines Rotorblatts (104) mit einem System (107) nach einem der vorhergehenden Ansprüche, aufweisend die Schritte:
- Bereitstellen der Auftragsvorrichtung (109) und der Haltevorrichtung (108), wobei die Haltevorrichtung (108) einen Versteifungssteg (110) hält;
- Bewegen der Auftragsvorrichtung (109) und der Haltevorrichtung (108) derart relativ zueinander, dass die Düseneinrichtung (116) relativ zu dem Versteifungssteg (110) bewegt und Klebemittel (115) auf eine Unterseite (114) des Versteifungsstegs (110) appliziert wird.

12. Verfahren nach Anspruch 11, wobei der Versteifungssteg (110) mittels der Haltevorrichtung (108) vor dem Schritt des Bewegens neben einer Rotorblatthalbschale positioniert wird.

13. Verfahren nach Anspruch 11 oder 12,
wobei die Auftragsvorrichtung (109) stationär an einem Boden (119) angeordnet ist und die Haltevorrichtung (108) derart relativ zu der Auftragsvorrichtung (109) bewegt wird, dass der Versteifungssteg (110) durch die Auftragsvorrichtung (109) geführt und dabei mittels der Düseneinrichtung Klebemittel (115) auf die Unterseite (114) des Versteifungssteges (110) appliziert wird.

14. Verfahren nach Anspruch 11 oder 12, wobei die Haltevorrichtung (108) stationär angeordnet und die Auftragsvorrichtung (109) relativ zu einem Boden (119) und relativ zu der Haltevorrichtung (108) derart bewegt wird, dass die Düseneinheit (116) entlang der Unterseite (114) des Versteifungssteges (110) bewegt und dabei Klebemittel (115) auf die Unterseite (114) appliziert wird.

15. Verfahren nach einem der Ansprüche 11 bis 14, wobei die Haltevorrichtung (108) zwei Versteifungsstege (110) hält und die Auftragsvorrichtung (109) zwei Düseneinheiten (116) aufweist, wobei im Schritt des Bewegens je eine Düseneinheit (116) auf eine Unterseite (114) eines Versteifungsstegs (110) Klebemittel (115) appliziert.
